# EUROPÄISCHE PATENTANMELDUNG

(11) **EP 3 175 962 A2**
(43) Veröffentlichungstag der Anmeldung: **07.06.2017**
(21) Anmeldenummer: 16455002.2
(22) Anmeldetag: 05.07.2016
(51) Int. Cl.: B27N 7/00, B44C 5/04

(54) **VERFAHREN ZUR BILDUNG EINES HOLZ-DEKORPRODUKTES**

(30) Priorität: 01.12.2015 AT 7692015
(71) Anmelder: Duralignum GmbH, 8740 Zeltweg (AT)
(72) Erfinder: Salchenegger, Siegfried, 8820 Neumarkt (AT)
(74) Vertreter: Puchberger & Partner Patentanwälte

(57) **Zusammenfassung**

Verfahren zur Bildung eines Holz-Dekorproduktes (1), umfassend folgende Schritte:
- Bereitstellen eines Formteils (2) mit mindestens einer Dekorfläche (3) aus Holz,
- Überziehen der Dekorfläche (3) mit einer Deckschicht (4) durch Auftragen einer durchsichtig oder transparent aushärtenden Masse (5) im flüssigen bis pastösen Zustand und durch Einbetten von in der ausgehärteten Masse transparent erscheinenden Fasern (6) in die Deckschicht (4),
- Überdecken der außenliegenden Oberfläche (7) der Deckschicht (4) mit einer Deckfolie (8),
- Anlegen eines Unterdrucks zwischen der Deckfolie (8) und dem Formteil (2),
- Glätten der Oberfläche (7) der unausgehärteten Deckschicht (4) durch mechanisches Glätten der Deckfolie (8) von außen,
- und Aushärten der geglätteten Deckschicht (4).

## Beschreibung

Die Erfindung betrifft ein Verfahren zur Bildung eines Holz-Dekorproduktes und ein Holz-Dekorprodukt, das nach dem beschriebenen Verfahren hergestellt ist.

Dekorprodukte aus Holz, insbesondere Holzplatten oder Holzstäbe, sind in unterschiedlichen Ausführungen bekannt und publiziert.

Beispielsweise sind Holz-Dekorprodukte bekannt, die als Fassadenplatten an der Außenseite von Bauwerken angebracht werden. Insbesondere bei derartigen Fassadenplatten ist es von großer Wichtigkeit, die Witterungsbeständigkeit sicherzustellen. Hierzu sind gemäß Stand der Technik unterschiedliche Formen der Oberflächenbehandlung bekannt. Bei stärker beanspruchten Holz-Dekorprodukten sind neben der Witterungsbeständigkeit auch die mechanische Widerstandsfähigkeit, insbesondere die Oberflächenhärte und die Biegesteifigkeit relevant. Für derartige Anwendungen werden in der Regel Harthölzer verwendet, die jedoch teurer sind als günstige Weichhölzer.

Weitere Beispiele für Holz-Dekorprodukte sind beispielsweise Möbelplatten wie beispielsweise Möbelfronten oder Tischplatten, deren Oberflächen meist geölt oder lackiert sind, um deren Widerstandsfähigkeit zu verbessern. Während geölte Möbelplatten aufgrund ihrer Offenporigkeit für viele Einsatzbereiche, wie beispielsweise für die Gastronomie oder für Spitalseinrichtungen, nicht verwendet werden dürfen, weisen lackierte Holzoberflächen den Nachteil auf, dass bei einer Verletzung der Lackschicht Feuchtigkeit und Schmutz hinter die Lackschicht gelangt, was in weiterer Folge ein großflächiges Abplatzen der Lackschicht bewirkt.

Aufgabe der Erfindung ist es nun die Nachteile des Standes der Technik zu überwinden. Dies umfasst insbesondere, dass ein Holz-Dekorprodukt geschaffen wird, das eine erhöhte Widerstandsfähigkeit aufweist. Diese Widerstandsfähigkeit kann eine Widerstandsfähigkeit gegenüber Witterungseinflüssen sein. Zusätzlich oder alternativ kann die Widerstandsfähigkeit auch eine mechanische Widerstandsfähigkeit, beispielsweise eine erhöhte Härte oder eine erhöhte Biegesteifigkeit sein. Ferner kann bevorzugt eine flüssigkeitsdichte und gegebenenfalls glatte Oberfläche geschaffen werden.

Insbesondere kann durch das erfindungsgemäße Verfahren ein Holz-Dekorprodukt geschaffen werden, bei dem als Ausgangsmaterial ein relativ günstiges Holz mit verhältnismäßig niedriger Widerstandsfähigkeit verwendet wird, das aber als fertiges Produkt eine Widerstandsfähigkeit aufweist, die die Widerstandsfähigkeit teuer Ausgangsmaterialien übersteigt.

Die erfindungsgemäße Aufgabe wird insbesondere durch die Merkmale der unabhängigen Patentansprüche gelöst.

Bevorzugt betrifft die Erfindung ein Verfahren zur Bildung eines Holz-Dekorproduktes und insbesondere zur teilautomatisierten oder vollautomatisierten Bildung eines Holz-Dekorproduktes.

Bevorzugt umfasst das Verfahren folgende Schritte:
- Bereitstellen eines Formteils mit mindestens einer Dekorfläche aus Holz,
- Überziehen der Dekorfläche mit einer Deckschicht durch Auftragen einer durchsichtig oder transparent aushärtenden Masse im flüssigen bis pastösen Zustand und durch Einbetten von in der ausgehärteten Masse transparent erscheinenden Fasern in die Deckschicht,

- Überdecken der außenliegenden Oberfläche der Deckschicht mit einer Deckfolie,
- Anlegen eines Unterdrucks zwischen der Deckfolie und dem Formteil,
- Glätten der Oberfläche der unausgehärteten Deckschicht durch mechanisches Glätten der Deckfolie von außen,
- und Aushärten der geglätteten Deckschicht.

Gegebenenfalls ist vorgesehen, dass das Überziehen der Dekorfläche mit einer Deckschicht folgende Schritte umfasst:
- Auflegen der Fasern oder eines Fasergewebes auf die Dekorfläche,
- und anschließend Auftragen der Masse auf die Dekorfläche, sodass die Fasern oder das Fasergewebe in die Deckschicht eingebettet werden,
oder dass das Überziehen der Dekorfläche mit einer Deckschicht folgende Schritte umfasst:
- Auftragen eines Gemisches umfassende die Masse und die Fasern auf die Dekorfläche.

Gegebenenfalls ist vorgesehen, dass die Masse als der Dekorfläche folgende Schicht aufgetragen wird.
Gegebenenfalls ist vorgesehen, dass der Formteil zum Anlegen des Unterdrucks in einer Unterdruckkammer angeordnet wird, und dass die Unterdruckkammer zum Anlegen des Unterdrucks zumindest teilweise von der Deckfolie begrenzt, gebildet und/oder verschlossen wird.

Gegebenenfalls ist vorgesehen, dass zum Glätten der Oberfläche der unausgehärteten Deckschicht, der Verlauf der Deckfolie mechanisch angepasst wird, sodass die zwischen Deckfolie und Dekorfläche angeordnete Deckschicht eine vorbestimmte Form erhält.

Gegebenenfalls ist vorgesehen, dass zum Glätten der Oberfläche der unausgehärteten Deckschicht,
- ein Stempel von außen auf die Deckfolie aufgepresst wird,
- oder ein Stempel mit einer glatten Stempelfläche von außen auf die Deckfolie aufgepresst wird,
- oder ein bewegliches Glättelement über die Außenseite der Deckfolie streicht,
- oder eine beweglich angeordnete Leiste über die Außenseite der Deckfolie streicht,
- oder eine beweglich angeordnete Rolle über die Außenseite der Deckfolie abrollt.

Gegebenenfalls ist vorgesehen, dass das mechanische Glätten automatisiert oder teilautomatisiert erfolgt.

Gegebenenfalls ist vorgesehen, dass die Deckschicht zum Aushärten beheizt und/oder mit einer zur Aushärtung geeigneten Strahlung wie UV-Strahlung bestrahlt wird.

Gegebenenfalls ist vorgesehen, dass der Formteil eine Stangenware, eine Stabware oder eine Plattenware aus Holz oder mit einer Holzoberfläche ist, wobei das Formteil, insbesondere aus Weichholz wie Fichtenholz gebildet ist oder Weichholz wie Fichtenholz umfasst.

Gegebenenfalls ist vorgesehen, dass die Masse eine transparent oder durchsichtig aushärtende Masse wie Epoxidharz, Polyesterharz, Acrylharz oder Phenolharz gegebenenfalls unter Zugabe eines oder mehrerer Zusatzstoffe wie Farbstoff ist.

Gegebenenfalls ist vorgesehen, dass die Fasern Verstärkungsfasern wie Glasfasern sind.

Gegebenenfalls ist vorgesehen, dass der Formteil eine Holzplatte mit mindestens einer Dekoroberfläche ist, wobei die Dekoroberfläche eine dekorative Holzmaserung trägt.

Gegebenenfalls ist vorgesehen, dass der Formteil eine Holzplatte mit zwei Flachseiten ist, wobei mindestens eine der beiden Flachseiten eine Dekoroberfläche trägt,
wobei folgende Schritte ausgeführt werden:
- Überziehen der beiden Flachseiten und gegebenenfalls auch die Stirnseiten mit einer Deckschicht durch Auftragen einer durchsichtig oder transparent aushärtenden Masse im flüssigen bis pastösen Zustand und durch Einbetten von in der ausgehärteten Masse transparent erscheinenden Verstärkungsfasern in die Deckschicht,
- Überdecken der außenliegenden Oberflächen der Deckschicht mit einer oder mehreren Deckfolie(n),
- Anlegen eines Unterdrucks zwischen der mindestens einer Deckfolie und dem Formteil,
- Glätten der Oberflächen der unausgehärteten Deckschichten durch mechanisches Glätten der Deckfolie(n) von außen,
- und Aushärten der geglätteten Deckschichten.

Gegebenenfalls ist vorgesehen, dass die Deckfolie nach der Herstellung als Schutzfolie auf der ausgehärteten Deckschicht anhaftend verbleibt und erst zu einem späteren Zeitpunkt, insbesondere nach dem Transport oder nach der Montage abgezogen wird.

Gegebenenfalls betrifft die Erfindung ein Holz-Dekorprodukt, das nach dem erfindungsgemäßen Verfahren hergestellt ist.

Als Holz-Dekorprodukt im Sinne der Erfindung wird insbesondere ein Produkt definiert, das zumindest teilweise aus Holz gebildet ist und insbesondere eine sichtbare, dekorative Dekorfläche aus Holz besitzt. Das Holz-Dekorprodukt kann beispielsweise eine Fassadenplatte, eine Möbelplatte oder ein andersförmiges Holzprodukt sein.

Durch das erfindungsgemäße Verfahren wird ein Holz-Dekorprodukt geschaffen, das eine ausgehärtete Deckschicht umfasst. Diese Deckschicht ist bevorzugt transparent oder durchsichtig ausgeführt. Dadurch kann die darunterliegende Holzmaserung der Dekorfläche von außen, durch die Deckschicht hindurch, betrachtet werden. Gegebenenfalls ist die Deckschicht mit einem Farbton versehen, um dem Dekorprodukt eine Farbe zu geben oder die Helligkeit der Dekorfläche bzw. des Holz-Dekorprodukts zu wählen. Auch derartige gefärbte oder getönte Deckschichten weisen eine Transparenz bzw. eine Durchsichtigkeit auf, sodass die Holzmaserung sichtbar bleibt.

Durch die Deckschicht wird eine Oberfläche des Holz-Dekorproduktes geschaffen, die eine erhöhte Widerstandsfähigkeit aufweist. Durch Verwendung aushärtender Massen, wie beispielsweise aushärtende Harze, kann in allen Ausführungsformen eine Oberfläche geschaffen werden, die eine Versiegelung der offenporigen Oberfläche des Holz-Formteils bildet. Zusätzlich kann je nach Wahl des Harzes eine Deckschicht gebildet werden, die eine größere Härte aufweist als der Holz-Formteil. Durch die Einbettung von Fasern kann darüber hinaus eine weitere Verstärkung des Dekorproduktes bzw. der Deckschicht erfolgen. Insbesondere kann dadurch auch die Stabilität bzw. die Biegesteifigkeit des gesamten Dekorproduktes verbessert werden.

Gegebenenfalls ist vorgesehen, dass an zwei gegenüberliegenden Seiten des Formteils eine ausgehärtete Deckschicht vorgesehen ist, womit die Deckschicht ähnlich einer Begurtung wirkt. Gegebenenfalls ist vorgesehen, dass das gesamte Formteil durch Auftragen einer Deckschicht versiegelt ist.

In allen Ausführungsformen kann die ausgehärtete Deckschicht eine größere Härte und/oder Zähigkeit aufweisen als eine herkömmliche Lackschicht.

In weiterer Folge wird die Erfindung anhand der Figuren weiter ausgeführt.

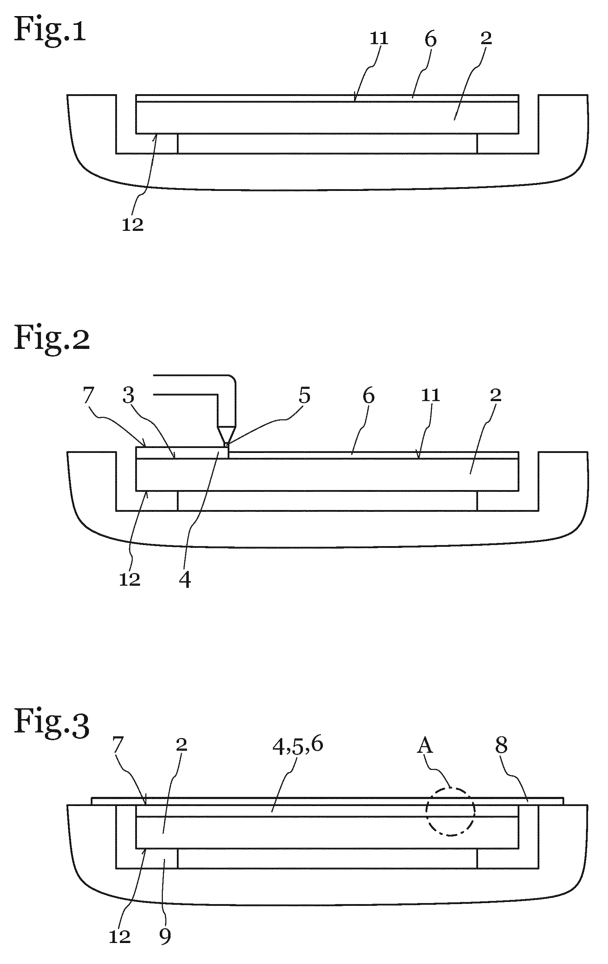

Die Figuren 1 bis 7 zeigen eine Abfolge von Verfahrensschritten einer möglichen Ausführungsform der Erfindung, wobei die Proportionen der Komponenten zur Verbesserung der Darstellbarkeit nicht realitätsgetreu sind. Wenn nicht anders angegeben, so entsprechen die Bezugszeichen folgenden Komponenten: Dekorprodukt 1, Formteil 2, Dekorfläche 3, Deckschicht 4, Masse 5, Verstärkungsfasern 6, außenliegende Oberfläche (der Deckschicht) 7, Deckfolie 8, Unterdruckkammer 9, Glättelement 10, Flachseite 11, Flachseite 12, Stirnseite 13.

Beim erfindungsgemäßen Verfahren wird in einem ersten Schritt ein Formteil 2 bereitgestellt. Dieser Formteil 2 ist in der vorliegenden Ausführungsform eine Holzplatte, insbesondere eine Holzplatte mit zwei Flachseiten 11, 12, wobei diese beiden Flachseiten 11, 12 jeweils als Dekorfläche 3 aus Holz ausgebildet sind. Der Formteil 2 wird durch ein geeignetes Mittel festgehalten. Danach wird, wie in Fig. 2 ersichtlich, auf die Dekorfläche 3 der ersten Flachseite 11 des Formteils 2 eine Deckschicht 4 aufgetragen. Die Deckschicht 4 umfasst eine durchsichtig oder transparent aushärtende Masse 5 sowie Verstärkungsfasern 6, die in die Deckschicht 4 bzw. in die Masse 5 eingebettet sind. Die Fasern können dabei, wie in Fig. 1 ersichtlich, vor dem Auftragen der Masse 5 auf die Dekorfläche 3 gelegt werden, sodass in einem nachfolgenden Schritt die Masse 5 auf die Dekorfläche 3 und auf die auf der Dekorfläche 3 befindlichen Fasern 6 aufgetragen werden kann. Dadurch werden die Fasern 6 in die Deckschicht 4 eingebettet. Gemäß einer nicht dargestellten Ausführungsform können die Fasern 6 bereits in der Masse 5 enthalten sein, wobei dieses Gemisch, das die Masse 5 und die Fasern 6 umfasst, auf die Dekorfläche 3 aufgetragen wird.

Bevorzugt wird die Masse 5 durch einen Düsenbalken, einen Düsenspaltbalken oder über Mischdüsen aufgetragen, sodass eine im Wesentlichen gleichmäßige Deckschicht 4 aufgetragen wird. Gegebenenfalls weist die Deckschicht 4 jedoch eine unregelmäßige Dicke auf, die erst in einem nachfolgenden Schritt geglättet wird.

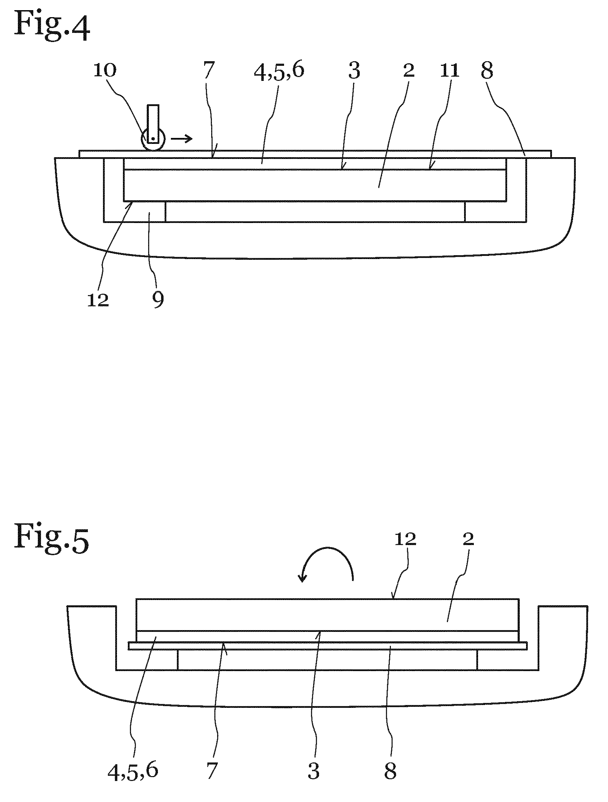

In einem nächsten Schritt wird, wie in Fig. 3 ersichtlich, eine Deckfolie 8 von außen auf die noch nicht ausgehärtete Deckschicht 4 aufgelegt. Die Deckfolie 8 wird dabei flächig auf die Deckschicht 4 aufgelegt, womit die Deckschicht 4 und die Deckfolie 8 dem Verlauf der Dekorfläche 3 folgen. In einem nachfolgenden Schritt wird zwischen der Deckfolie 8 und dem Formteil 2 ein Unterdruck angelegt. Dieser Unterdruck dient insbesondere dazu, gegebenenfalls zwischen der Deckfolie 8 und der Deckschicht 4 befindliche Luft bzw. in der Deckschicht 4 befindliche Luft aus der Deckschicht 4 zu entfernen. Hierzu kann, wie in der vorliegenden Ausführungsform, der Formkörper in einer Unterdruckkammer 9 angeordnet werden, wobei die Unterdruckkammer 9 zumindest teilweise von der Deckfolie 8 gebildet, begrenzt oder verschlossen wird. Durch Anlegen eines Unterdrucks in dieser Kammer, wird auch die Deckfolie 8 an die Deckschicht 4 gepresst. Anschließend oder gleichzeitig wird, wie in Fig. 4 ersichtlich, die Oberfläche der unausgehärteten Deckschicht 4, durch mechanisches Glätten der Deckfolie 8 von außen, geglättet. Hierzu ist ein Glättelement 10 vorgesehen, das in dieser Ausführungsform als bewegbare Rolle oder Walze ausgebildet ist. Diese Walze erstreckt sich bevorzugt über die gesamte Breite des Formteils 2 und kann normal zu dieser Erstreckungsrichtung bewegt werden, sodass die Walze über die gesamte Deckschicht 4 abrollen kann. Insbesondere rollt die Walze an der Außenseite der Deckfolie 8 ab. Dadurch werden die Deckfolie 8 und die darunterliegende Deckschicht 4 geglättet.

Ist die Deckschicht 4 geglättet und etwaige Gas- oder Luftanschlüsse aus der Deckschicht 4 entfernt, so wird die Masse 5 ausgehärtet, sodass auch die Deckschicht 4 ausgehärtet wird. Diese Aushärtung kann beispielsweise durch Wärmeeinwirkung und/oder UV-Einwirkung beschleunigt oder aktiviert werden. In einem weiteren Schritt kann der Druck wieder auf Normaldruck gebracht werden.

Bei der vorliegenden Ausführungsform des Verfahrens wird, wie in Fig. 5 ersichtlich, die Platte gewendet. Die Deckfolie 8 verbleibt dabei auf der gebildeten ersten Deckschicht 4.

In weiterer Folge können die beschriebenen Verfahrensschritte an der zweiten Flachseite 12 durchgeführt werden, womit ein beidseitig mit einer Deckschicht 4 versehenes Holz-Dekorelement 1 gebildet wird.

Gegebenenfalls können auch die Stirnseiten 13 des Formteils 2 in analoger Weise bearbeitet werden. Gegebenenfalls können die Stirnseiten 13 jedoch auch faserfrei durch die Masse 5 versiegelt werden. Gegebenenfalls können die Stirnseiten 13 frei bleiben, sodass Feuchtigkeit durch die Stirnseiten 13 der Platte entweichen kann.

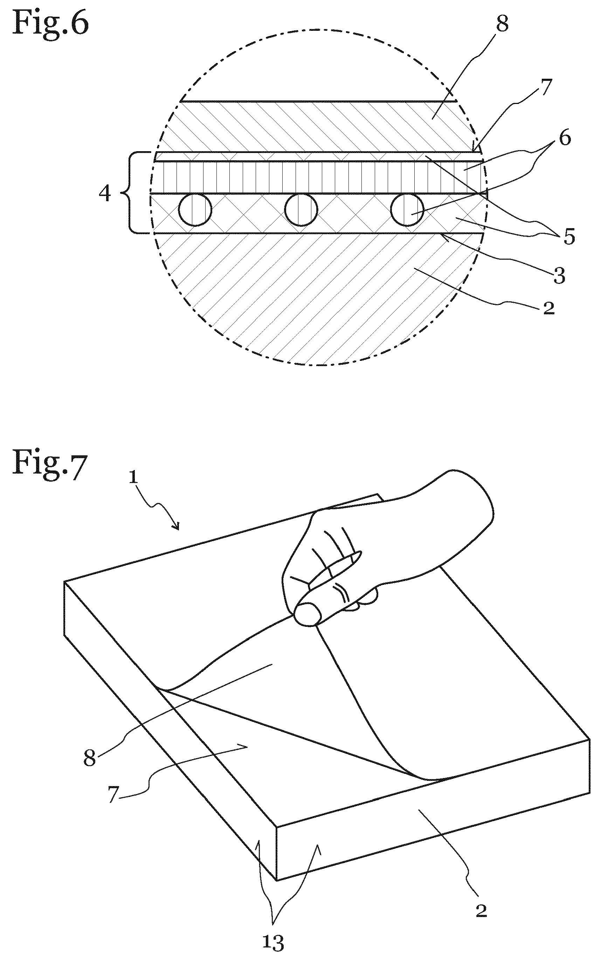

Fig. 6 zeigt den Schichtaufbau der Anordnung, insbesondere des Holz-Dekorproduktes 1 mit der Deckfolie 8, in einer vergrößerten Darstellung, wie sie beispielsweise Detail A in Fig. 3 entspricht. Auf der Dekorfläche 3 des Formteils 2 ist die Deckschicht 4 angeordnet. Die Deckschicht 4 umfasst Fasern 6 sowie eine aushärtbare Masse 5, wobei die Fasern 6 in die Masse 5 eingebettet sind. Auf der Deckschicht 4, insbesondere auf deren außenliegender Oberfläche 7, ist eine Deckfolie 8 angeordnet.

Gemäß eine bevorzugten Ausführungsform verbleibt die Deckfolie 8 bzw. verbleiben die Deckfolien 8 nach der Produktion auf den jeweiligen Deckschichten 4. Die Deckfolie 8 dient in der weiteren Folge als Schutzfolie. Diese kann, wie in Fig.7 ersichtlich, beispielsweise händisch entfernt werden, nachdem das Holz-Dekorprodukt 1 montiert ist. Dadurch wird ein Zerkratzen der Oberfläche während dem Transport und gegebenenfalls auch während der Montage verhindert. Die als Schutzfolie dienende Deckfolie 8 haftet dabei nach der Aushärtung an der Deckschicht 4, kann aber beispielsweise händisch abgezogen werden.

## Patentansprüche

1. Verfahren zur Bildung eines Holz-Dekorproduktes (1), umfassend folgende Schritte:
- Bereitstellen eines Formteils (2) mit mindestens einer Dekorfläche (3) aus Holz,
- Überziehen der Dekorfläche (3) mit einer Deckschicht (4) durch Auftragen einer durchsichtig oder transparent aushärtenden Masse (5) im flüssigen bis pastösen Zustand und durch Einbetten von in der ausgehärteten Masse transparent erscheinenden Fasern (6) in die Deckschicht (4),
- Überdecken der außenliegenden Oberfläche (7) der Deckschicht (4) mit einer Deckfolie (8),
- Anlegen eines Unterdrucks zwischen der Deckfolie (8) und dem Formteil (2),
- Glätten der Oberfläche (7) der unausgehärteten Deckschicht (4) durch mechanisches Glätten der Deckfolie (8) von außen,
- und Aushärten der geglätteten Deckschicht (4).

2. Verfahren nach Anspruch 1, **dadurch gekennzeichnet,**
**dass** das Überziehen der Dekorfläche (3) mit einer Deckschicht (4) folgende Schritte umfasst:
- Auflegen der Fasern (6) oder eines Fasergewebes auf die Dekorfläche (7),
- und anschließend Auftragen der Masse (5) auf die Dekorfläche (3), sodass die Fasern (6) oder das Fasergewebe in die Deckschicht (4) eingebettet werden, oder dass das Überziehen der Dekorfläche (3) mit einer Deckschicht (4) folgende Schritte umfasst:
- Auftragen eines Gemisches umfassende die Masse (5) und die Fasern (6) auf die Dekorfläche (3).

3. Verfahren nach Anspruch 1 oder 2, **dadurch gekennzeichnet, dass** die Masse (5) als der Dekorfläche (3) folgende Schicht aufgetragen wird.

4. Verfahren nach einem der Ansprüche 1 bis 3, **dadurch gekennzeichnet, dass** der Formteil (2) zum Anlegen des Unterdrucks in einer Unterdruckkammer (9) angeordnet wird, und dass die Unterdruckkammer (9) zum Anlegen des Unterdrucks zumindest teilweise von der Deckfolie (8) begrenzt, gebildet und/oder verschlossen wird.

5. Verfahren nach einem der Ansprüche 1 bis 4, **dadurch gekennzeichnet, dass** zum Glätten der Oberfläche der unausgehärteten Deckschicht (4), der Verlauf der Deckfolie (8) mechanisch angepasst wird, sodass die zwischen Deckfolie (8) und Dekorfläche (3) angeordnete Deckschicht (4) eine vorbestimmte Form erhält.

6. Verfahren nach einem der Ansprüche 1 bis 5, **dadurch gekennzeichnet, dass** zum Glätten der Oberfläche der unausgehärteten Deckschicht (4),
- ein Stempel von außen auf die Deckfolie (8) aufgepresst wird,
- oder ein Stempel mit einer glatten Stempelfläche von außen auf die Deckfolie (8) aufgepresst wird,
- oder ein bewegliches Glättelement (10) über die Außenseite der Deckfolie (8) streicht,
- oder eine beweglich angeordnete Leiste über die Außenseite der Deckfolie (8) streicht,
- oder eine beweglich angeordnete Rolle über die Außenseite der Deckfolie (8) abrollt.

7. Verfahren nach einem der Ansprüche 1 bis 6, **dadurch gekennzeichnet, dass** das mechanische Glätten automatisiert oder teilautomatisiert erfolgt.

8. Verfahren nach einem der Ansprüche 1 bis 7, **dadurch gekennzeichnet, dass** die Deckschicht (4) zum Aushärten beheizt und/oder mit einer zur Aushärtung geeigneten Strahlung wie UV-Strahlung bestrahlt wird.

9. Verfahren nach einem der Ansprüche 1 bis 8, **dadurch gekennzeichnet, dass** der Formteil (2) eine Stangenware, eine Stabware oder eine Plattenware aus Holz oder mit einer Holzoberfläche ist, wobei das Formteil (2), insbesondere aus Weichholz wie Fichtenholz gebildet ist oder Weichholz wie Fichtenholz umfasst.

10. Verfahren nach einem der Ansprüche 1 bis 9, **dadurch gekennzeichnet, dass** die Masse (5) eine transparent oder durchsichtig aushärtende Masse (5) wie Epoxidharz, Polyesterharz, Acrylharz oder Phenolharz gegebenenfalls unter Zugabe eines oder mehrerer Zusatzstoffe wie Farbstoff ist.

11. Verfahren nach einem der Ansprüche 1 bis 10, **dadurch gekennzeichnet, dass** die Fasern (6) Verstärkungsfasern wie Glasfasern sind.

12. Verfahren nach einem der Ansprüche 1 bis 11, **dadurch gekennzeichnet, dass** der Formteil (2) eine Holzplatte mit mindestens einer Dekoroberfläche ist, wobei die Dekoroberfläche eine dekorative Holzmaserung trägt.

13. Verfahren nach einem der Ansprüche 1 bis 12, **dadurch gekennzeichnet, dass** der Formteil (2) eine Holzplatte mit zwei Flachseiten (11, 12) ist, wobei mindestens eine der beiden Flachseiten (11, 12) eine Dekoroberfläche trägt, wobei folgende Schritte ausgeführt werden:
- Überziehen der beiden Flachseiten (11, 12) und gegebenenfalls auch die Stirnseiten (13) mit einer Deckschicht (4) durch Auftragen einer durchsichtig oder transparent aushärtenden Masse (5) im flüssigen bis pastösen Zustand und durch Einbetten von in der ausgehärteten Masse (5) transparent erscheinenden Verstärkungsfasern (6) in die Deckschicht,
- Überdecken der außenliegenden Oberflächen der Deckschicht (7) mit einer oder mehreren Deckfolie(n) (8),
- Anlegen eines Unterdrucks zwischen der mindestens einer Deckfolie (8) und dem Formteil (2),
- Glätten der Oberflächen der unausgehärteten Deckschichten (7) durch mechanisches Glätten der Deckfolie(n) (8) von außen,
- und Aushärten der geglätteten Deckschichten (7).

14. Verfahren nach einem der Ansprüche 1 bis 13, **dadurch gekennzeichnet, dass** die Deckfolie (8) nach der Herstellung als Schutzfolie auf der ausgehärteten Deckschicht (4) anhaftend verbleibt und erst zu einem späteren Zeitpunkt, insbesondere nach dem Transport oder nach der Montage abgezogen wird.

15. Holz-Dekorprodukt (1), hergestellt nach einem der vorangegangenen Ansprüche.
